# EUROPEAN PATENT SPECIFICATION

(11) **EP 0 884 814 B1**
(45) Date of publication and mention of the grant of the patent: **14.01.2009**
(21) Application number: 98201553.9
(22) Date of filing: 12.05.1998
(51) Int. Cl.: H02B 1/21

(54) **Modular adapter for electrical devices**
Modularer Adapter für elektrische Vorrichtungen
Adaptateur modulaire pour des dispositifs électriques

(30) Priority: 16.05.1997 IT MI971153
(43) Date of publication of application: 16.12.1998
(73) Proprietor: ABB S.p.A., 20124 Milano (IT)
(72) Inventor: Fontana, Rodolfo, 21050 Clivio, (VA) (IT)
(74) Representative: Giavarini, Francesco

(56) References cited:
- EP-A- 0 186 556
- DE-U- 9 017 385
- FR-A- 2 318 523
- GB-A- 1 181 893

## Description

The invention concerns a modular adapter for electrical devices, such as moulded-case circuit-breakers for example, usually installed inside electrical cabinets or switchboards. The adapter features a clamping device for the connection to a multiple-pole bar-based electricity distribution system and a conductor, which forms an integral part of the clamping device, for the electrical connection of the device.

It is known that metal bars installed parallel to one another are used to distribute electricity to several devices. The bar-based distribution system is connected to the corresponding poles of the mains power supply.

The electrical devices are connected to the bar system.

At present, the electrical connection of the devices to the distribution bars is made using special conductors that are shaped to suit the type of device and type of container.

This solution is particularly costly in installation and not very flexible, being specially dimensioned for the connection of each individual electrical device to suit its size and location in the container.

Adapters are also known that enable the devices to be connected directly to the bars.

These adapters are currently formed by bases that are dimensioned to suit the device to be connected and the number of poles to be connected.

The known adapters are thus also not very flexible. It is not for example possible to use an adapter dimensioned for a three-pole circuit-breaker to support a four-pole circuit-breaker.

In addition, these bases feature seatings on the side opposite the device that are designed to receive special hooks that enable the mechanical connection and electrical connection of the device to the distribution bars.

The conductors required for powering the electrical device from the bars are fixed to the hooks, which are made from a conductive material.

The connection of the adapter to the bars using the hooks is particularly difficult and complicated to make. Indeed, to connect the device to the bars one first has to fix the adapter to the bars using the hooks, install the conductors and then tighten the adapter on the bars before one can finally connect the device.

Moreover, the hooks and the adapter must be shaped to ensure the electrical and mechanical connection of the adapter supporting the electrical device. The system formed by the device and the adapter is in fact supported entirely by the bar system and any electrodynamic forces generated by the device are transmitted to the bar system in their entirety.

Document EP-A-0 186 556 discloses a modular adapter for connecting electrical devices to the bars of a multiple pole electricity distribution system. Clamping devices are located on the side of the adapter facing the electricity distribution bars with the connection axis aligned with the axis of the bar. The side of the adapter opposite the clamping device comprises a seating for receiving the electrical device.

The object of the present invention is to overcome the drawbacks of the prior art of the technique and in particular to make a connection between the devices and the electricity distribution bars that is modular, simple and rapid to install.

The object is achieved thanks to a modular adapter for electrical devices with the features of the independent claim 1.

In order to connect the device electrically to the clamping device for the connection to the electricity distribution bars, the body of the adapter contains a small U-shaped conductive bar that is electrically connected at one end to the back of the clamping device and at the other, where it partially projects from the body of the adapter, to a device.

Particular embodiments of the invention are described in the dependent claims.

In order to form a single seating with other adapters installed alongside to receive a multiple pole device, the seating for the electrical device takes the form of an open channel located by the edges of the adapter that are positioned transversely in relation to the bars. This makes it possible to install several adapters with the edges positioned transversely to the bars side by side to form a single support seating for multiple pole circuit-breakers.

In order to fix the adapter to a panel of the cabinet structure, the flange features a transverse hole for receiving fixing means.

In order to strengthen the connection of the adapter to the cabinet structure, the adapter's mounting flange features transverse reinforcing ribs.

In order to guide the insertion of the adapter in the bar system and to facilitate the fixing of the adapter on the cabinet structure, the flange reinforcing rib on the side of the adapter facing the bars features a slanting side that forms a guiding slideway for the adapter and features a seating near the flange for a wall of the cabinet structure.

In order to avoid the use of insulating partitions inside the adapter that separate the metal components from the electrical connection means, such as the clamping device and the conductor, the body of the adapter is made from an insulating material.

In order to house the clamping device for the connection to the electricity distribution bars and the conductor for the electrical connection to the device in the adapter, the adapter is formed from half-shells that take the form of a base and a cover.

In order to support and fix the electrical connection components inside the adapter, the body of the adapter features internal reinforcing ribs delimiting channels forming the support and fixing seatings for the clamping device and the electrical connection conductor.

In order to connect the adapter geometrically to the electricity distribution bars, the adapter features grooves on the side facing the electricity distribution bars that form transverse seatings for receiving the bars in a geometrical connection.

In order to provide the electrical connection concomitantly with the transverse seating for the bars, the clamping device is located inside the body of the adapter and to the side of the groove forming the seating for the electricity distribution bars.

In order to facilitate the electrical connection of the adapter to the electrical device, the channels inside the adapter body feature openings on the side opposite the bars close to the seating for the electrical device.

In order to prevent accidental contact with the part of the small metal bar that projects from the adapter, the conductor for the electrical connection of the device to the clamping device is covered with an insulating film and the electrical contact ends of the conductor are not covered by the insulating film.

The main advantages of the invention reside in the fact that the connection of the electrical device to the distribution bars is particularly simple and rapid. Indeed, one linear movement is all that is required to insert the adapter frontally in the bar system. The electrical device can be fitted to the adapter either before or after the adapter has been fitted on the bars.

A further advantage resides in the fact that the adapter is particularly flexible since it can be used to connect bars for different poles with the same configuration by, for example, simply installing it upside down.

It is, in addition, particularly simple to adapt the device that is the subject of the invention to devices with different poles. All that is in fact required is to install the number of adapters needed side by side to form a support providing the electrical connection to the bars for a multiple pole device.

The device is advantageously connected to the bar system electrically but supported by the cabinet structure. In this way any electrodynamic stress generated by the device is transmitted to the stronger structure of the cabinet.

The object designed as in the present invention is described in greater detail hereinafter and illustrated using one embodiment that is put forward solely by way of example in the annexed drawings in which:
Figure 1 shows a side section of an adapter mounted on a cabinet structure and connected to a bar-based electricity distribution system;
Figure 2 shows an axonometric view of three adapters fitted side by side and connected to the distribution bar system.

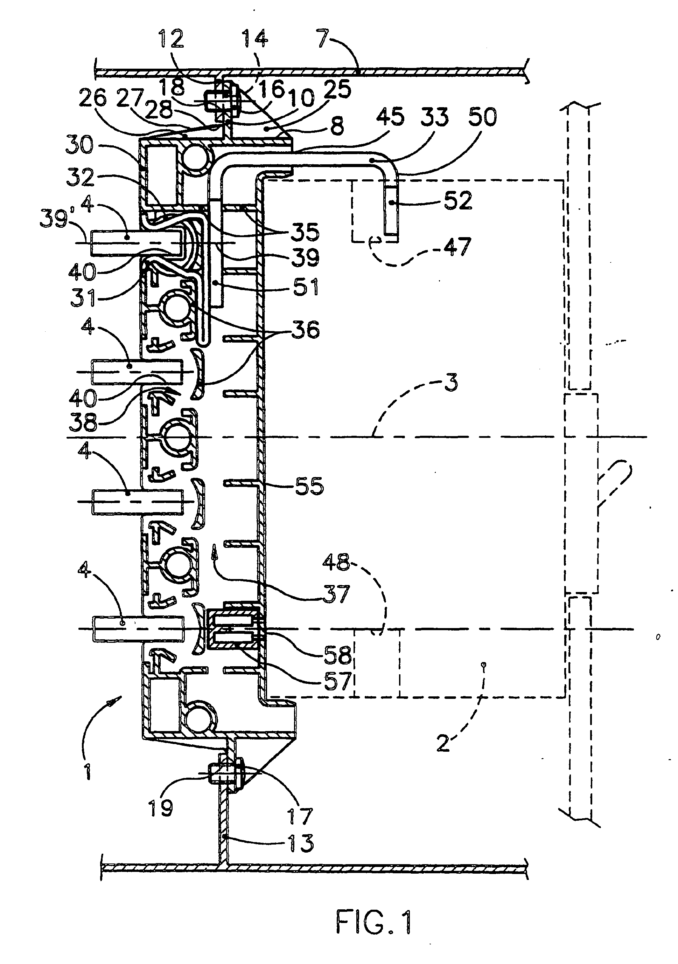

Figure 1 allows one to identify an adapter, indicated overall by 1, supporting an electrical device 2.

The adapter 1 is symmetrical in relation to the axis 3 of its centre line.

The adapter 1 is connected to the bars 4 of a bar-based electricity distribution system as described in greater detail hereinafter.

The adapter 1 is fixed at the top and at the bottom to the structure 7 of a container for electrical devices, such as a cabinet or switchboard for example.

Flanges 10 extend from the opposite edges 8 of the adapter 1. The flanges 10 are, for example, positioned transversely in relation to the adapter 1 and parallel to the bars 4.

The flanges 10 are positioned against the supporting walls 12, 13 present in the structure 7 of the container and connected to the latter using fixing means.

For example, the flanges 10 feature transverse through holes 14 that receive the screws 16, 17 fixed in the threaded holes 18, 19 present in the walls 12, 13.

The flanges are preferably fixed to the walls using bolts (not illustrated) held in the holes 14 of the flanges 10 and in the transversely extended grooves present in the walls 12, 13. The adapter 1 can in this way be fixed to the structure 7 in any transverse position.

Lateral reinforcing ribs 25, 26 are provided on the flanges 10.

The reinforcing ribs 26 on the side of the flanges 10 facing the distribution bars 4 form a guiding and centring slideway 27 for connecting the adapter 1 to the structure 7.

The reinforcing ribs 26 feature notches by the flanges 10 that form seatings 28 for the walls 12, 13. The seatings 28 facilitate the positioning of the flanges 10 up against the walls 12, 13.

The body 30 of the adapter 1 supports a known conductive clamping device 31 loaded by a spiral spring 32 and a conductor 33 that forms an integral part of the clamping device 31, for the electrical connection of the device 2 to the corresponding electricity distribution bar 4.

The body 30 of the adapter 1 is preferably formed from two half-shells taking the form of a base that receives the clamping device 31, the conductor 33 and a cover.

The body 30 of the adapter 1 features internal reinforcing ribs 35, 36 that delimit the channels 37, 38. The channels 37, 38 receive the clamping device 31 and the conductor 33.

The reinforcing ribs 35, 36 form the supports and mountings for the clamping device 31 and the conductor 33.

The reinforcing ribs 36 position the clamping device 31 in such a way that the axis 39 of its clamping motion is aligned with the axis 391 of the bar 4 that needs to be electrically connected to the device 2.

In a preferred embodiment, the body 30 features grooves 40 that are parallel to one another on the side facing the distribution bars 4.

The grooves 40 form seatings for receiving the distribution bars 4 in a geometrical connection.

The grooves 40 are open on the sides facing the inside of the body 30, forming the rear openings of the channels 38 from which the clamping device 31 clamps the distribution bar 4 for the electrical connection of the device 2.

The body 30 of the adapter 1 advantageously features openings 45 on the side opposite the distribution bars 4.

The openings 45 bring the channels 37 inside the body 30 that receive the conductor 33 into communication with the outside.

The openings 45 are preferably located close to the seatings 47, 48 for the electrical connection of the devices 2. A small U-shaped bar forms the conductor 33 for the electrical connection of the device 2.

The conductor 33 is covered by an insulating film 50 with the exception of the contact ends 51, 52.

One contact end 51 is fixed to the back of the clamping device 31 by welding for example. The other contact end 52 is inserted in the electrical connection seating 47 of the device 2.

The side of the adapter 1 opposite the distribution bars 4 features a seating 55 for the connection of the device 2 in a geometrical connection.

The seating 55 preferably has a channel shape. The channel is open on the edges that are positioned transversely in relation to the distribution bars 4.

The device 2 is fixed to the adapter 1 using a screw (not illustrated) for example.

An insert 57 featuring a threaded hole 58, such as a nut, is inserted in the body 30 of the adapter 1 for the fixing screw of the device 2.

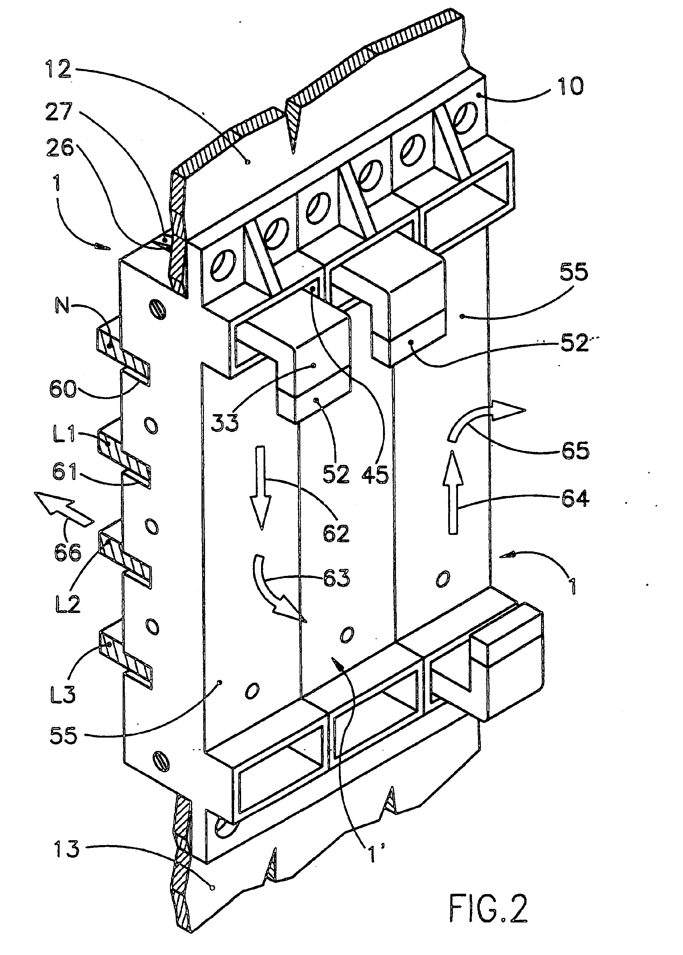

The connection of a three-pole device to a bar-based electricity distribution system is described hereinafter by way of example with the aid of Figure 2.

If one wants to connect a three-pole device to the electricity distribution bars marked N, L1, L3, it will be necessary to connect three adapters 1, 1' to the electrical device as described in detail hereinafter, these adapters featuring clamping devices that are aligned respectively with the bars N, L1 and L3 that need to be connected.

The adapters 1, 1' are identical to one another with the exception of the position of the clamping device 31 inside the body of the adapter 1, 1' and the length of the conductor 33 that connects the pole of the electrical device to the back of the clamping device 31.

In this case it is moreover sufficient to use just two configurations of the adapter 1, 1'. In these two configurations the clamping device is positioned in the first and second groove 60, 61 respectively.

The adapter with the clamping device located in the first groove 60 can in fact be used both to connect one pole of the electrical device to the first bar N and a further pole of the electrical device to the last bar L3.

The adapters 1, 1' are connected to the poles of the three-pole device (not illustrated) by slanting the adapter 1, 1' in relation to the electrical device, inserting the contact end 52 of the conductor 33 in the seatings 47 and 48 of the electrical device (in the direction of the arrows 62 and 64) and then turning the adapter 1, 1' (in the direction of the arrows 63 and 65) so as to insert the base ofthe three-pole device completely in the seating 55.

the adapter 1, 1' in relation to the electrical device, inserting the contact end 52 of the conductor 33 in the seatings 47 and 48 of the electrical device (in the direction of the arrows 62 and 64) and then turning the adapter 1, 1' (in the direction of the arrows 63 and 65) so as to insert the base of the three-pole device completely in the seating 55.

One should finally fix the flange 10 to the walls 12, 13 using screws 16, 17 for example In the event of the adapters 1, 1' having the same orientation it will advantageously be possible to first connect the adapters to the bars N, L1, L2, L3 and then subsequently connect the electrical device 2 to the adapters 1, 1', simultaneously inserting the conductors 33 in the electrical connection seatings 47 and then the base In the event of the adapters 1, 1' having the same orientation it will advantageously be possible to first connect the adapters to the bars N, L1, L2, L3 and then subsequently connect the electrical device 2 to the adapters 1, 1', simultaneously inserting the conductors 33 in the electrical connection seatings 47 and then the base of the device 2 in the seatings 55 of the adapters 1, 1'.

## Claims

1. A modular adapter (1) for electrical devices (2) comprising a body (30) supporting at least a clamping device (31) loaded by a spiral spring (32) for the connection to at least a bar (4) of a multiple pole bar-based electricity distribution system, said adapter comprising a conductor (33) forming an integral part of the clamping device (31) for the electrical connection of an electrical device (2), said adapter (1) being symmetrical in relation to the axis (3) of its centre line, said clamping device (31) being located on a side of the adapter (1) facing said bars (4) with the connection axis (39) aligned with the axis (39') of the bar (4) for the corresponding pole, the side of the adapter (1) opposite the clamping device (31) featuring a seating (55) for receiving the electrical device (2) in a geometrical connection, the opposite edges (8) of the adapter (1) featuring flanges (10) for connection to a supporting structure (7) said conductor (33) comprising a small U-shaped conductive bar (33) having one end (51) fixed to a back portion of said clamping device (31), and another end (52) partially projecting from the body (30) of the adapter (1) and inserted into a connection seating (47) of the electrical device (2).

2. Adapter (1) as in claim 1, **characterised by** the fact that the seating (55) for the electrical device (2) takes the form of a channel and by the fact that the openings of the channel are located by the edges of the adapter that are positioned transversely in relation to the bars (4).

3. Adapter (1), as in claim 2, **characterised by** the fact that several adapters (1) can be installed with their edges positioned transversely to the bars side by side to form a support for multiple pole devices (2).

4. Adapter (1), as in claim 1, **characterised by** the fact that the flanges (10) feature transverse holes (14) for receiving fixing means (16, 17).

5. Adapter (1), as in claim 1, **characterised by** the fact that the mounting flanges (10) on the adapter (1) feature reinforcing ribs (25, 26).

6. Adapter (1), as in claim 5, **characterised by** the fact that the reinforcing rib (26) for the flange (10) that faces the distribution bars (4) features a slanting side that forms a guiding and centering slideway (27) for the adapter (1).

7. Adapter (1), as in claim 1, **characterised by** the fact that the body (30) of the adapter (1) is made from an insulating material.

8. Adapter (1), as in claim 1, **characterised by** the fact that is formed from half-shells that take the form of a base and a cover.

9. Adapter (1), as in claim 1, **characterised by** the fact that the body (30) of the adapter (1) features internal reinforcing ribs (35, 36) delimiting channels (37, 38) forming the support and fixing seatings for the clamping device (31) and the electrical connection conductor (33).

10. Adapter (1), as in claim 1, **characterised by** the fact that it features grooves (40) on the side facing the distribution bars (4) that form transverse seatings for receiving the bars (4) in a geometrical connection.

11. Adapter (1), as in claim 10, **characterised by** the fact that the clamping device (31) is located inside the body (30) of the adapter (1) and to the side of the groove (40).

12. Adapter (1), as in claim 9, **characterised by** the fact that the channels (37, 38) inside the body (30) of the adapter (1) feature openings (45) on the side opposite the clamping device (31) close to the seating (55) for the electrical device (2).

13. Adapter (1), as in claim 1, **characterised by** the fact that the conductor (33) is covered with an insulating film (50) and the electrical contact ends (51, 52) of the conductor (33) are not covered by the insulating film (50).

## Patentansprüche

1. Modularer Adapter (1) für elektrische Vorrichtungen (2), der einen Körper (30) aufweist, der zumindest eine Klemmvorrichtung (31), die durch eine Spiralfeder (32) federbelastet ist, für die Verbindung mit zumindest einer Schiene (4) von einem auf einer Mehrpolschiene basierenden Elektrizitätsverteilungssystems trägt, wobei der Adapter einen Leiter (33) aufweist, der einen integralen Bestandteil der Klemmvorrichtung (31) für die elektrische Verbindung einer elektrischen Vorrichtung (2) ausbildet, wobei der Adapter (1) in Relation zur Achse (3) seiner Mittellinie symmetrisch ist, wobei die Klemmvorrichtung (31) auf einer Seite des Adapters (1) angeordnet ist, die den Schienen (4) zugewandt ist, wobei die Verbindungsachse (39) mit der Achse (39') der Schiene (4) für den entsprechenden Pol ausgerichtet ist, wobei die Seite des Adapters (1), die der Klemmvorrichtung (31) gegenüberliegt, eine Sitzeinrichtung (55) zum Aufnehmen der elektrischen Vorrichtung (2) in einer geometrischen Verbindung aufweist, wobei die einander gegenüberliegenden Kanten (8) des Adapters (1) Flansche (10) für eine Verbindung mit einer Tragstruktur (7) aufweisen, wobei der Leiter (33) eine kleine U-förmige leitfähige Schiene (33) aufweist, bei der ein Ende (51) an einem hinteren Bereich der Klemmvorrichtung (31) befestigt ist und ein anderes Ende (52) teilweise aus dem Körper (30) des Adapters (1) herausragt und in eine Verbindungssitzeinrichtung (47) der elektrischen Vorrichtung eingefügt ist.

2. Adapter (1) nach Anspruch 1, **gekennzeichnet durch** die Tatsache, dass die Sitzeinrichtung (55) für die elektrische Vorrichtung (2) die Form eines Kanals aufweist, und **durch** die Tatsache, dass die Öffnungen des Kanals an den Kanten des Adapters positioniert sind, die in Bezug auf die Schienen (4) quer positioniert sind.

3. Adapter (1) nach Anspruch 2, **gekennzeichnet durch** die Tatsache, dass mehrere Adapter (1) mit ihren quer zu den Schienen positionierten Kanten nebeneinander installiert werden können, um eine Trageinrichtung für mehrpolige Vorrichtungen (2) zu bilden.

4. Adapter (1) nach Anspruch 1, **gekennzeichnet durch** die Tatsache, dass die Flansche (10) querverlaufende Löcher (14) zum Aufnehmen von Befestigungseinrichtungen (16, 17) aufweisen.

5. Adapter (1) nach Anspruch 1, **gekennzeichnet durch** die Tatsache, dass die Befestigungsflansche (10) auf dem Adapter (1) Verstärkungsrippen (25, 26) aufweisen.

6. Adapter (1) nach Anspruch 5, **gekennzeichnet durch** die Tatsache, dass die Verstärkungsrippe (26) für den Flansch (10), der den Verteilungsschienen (4) gegenüberliegt, eine schräg abfallende Seite aufweist, die eine führende und zentrierende Gleitbahn (27) für den Adapter (1) ausbildet.

7. Adapter (1) nach Anspruch 1, **gekennzeichnet durch** die Tatsache, dass der Körper (30) des Adapters (1) aus seinem Isoliermaterial gefertigt ist.

8. Adapter (1) nach Anspruch (1), **gekennzeichnet durch** die Tatsache, dass er aus Halbschalen gebildet ist, die die Form einer Basis und einer Abdeckung aufweisen.

9. Adapter (1) nach Anspruch (1), **gekennzeichnet durch** die Tatsache, dass der Körper (30) des Adapters (1) innere Verstärkungsrippen (35, 36) aufweist, die Kanäle (37, 38) abgrenzen, die die Trageinrichtung und Befestigungssitzeinrichtungen für die Klemmvorrichtung (31) und den elektrischen Verbindungsleiter (33) ausbilden.

10. Adapter (1) nach Anspruch 1, **gekennzeichnet durch** die Tatsache, dass er Nuten (40) auf der Seite aufweist, die den Verteilungsschienen (4) gegenüberliegt, die quer verlaufende Sitzeinrichtungen zum Aufnehmen der Schienen (4) in einer geometrischen Verbindung ausbilden.

11. Adapter (1) nach Anspruch 10, **gekennzeichnet durch** die Tatsache, dass die Klemmvorrichtung (31) innerhalb des Körpers (30) des Adapters (1) und zur Seite der Nut (40) angeordnet ist.

12. Adapter (1) nach Anspruch 9, **gekennzeichnet durch** die Tatsache, dass die Kanäle (37, 38) innerhalb des Körpers (30) des Adapters (1) Öffnungen (45) auf der Seite gegenüber der Klemmvorrichtung (31) in der Nähe der Sitzeinrichtung (55) für die elektrische Vorrichtung (2) aufweisen.

13. Adapter (1) nach Anspruch 1, **gekennzeichnet durch** die Tatsache, dass der Leiter (33) mit einer Isolierfolie (50) bedeckt ist und die elektrischen Kontaktenden (51, 52) des Leiters (33) nicht **durch** die Isolierfolie (50) bedeckt sind.

## Revendications

1. Adaptateur (1) modulaire pour des dispositifs électriques (2), comprenant un corps (30), supportant au moins un dispositif de serrage (31) chargé par un ressort spiral (32), pour la connexion à au moins une barre (4) d'un système de distribution d'électricité à base de barres à pôles multiples, ledit adaptateur comprenant un conducteur (33) formant partie intégrante du dispositif de serrage (31) pour la connexion électrique d'un dispositif électrique (2), ledit adaptateur (1) étant symétrique par rapport à l'axe (3) de son axe central, ledit dispositif de serrage (31) étant disposé sur un côté de l'adaptateur (1) en regard desdites barres (4), l'axe de connexion (39) étant aligné avec l'axe (39') de la barre (4) pour le pôle correspondant, le côté de l'adaptateur (1) opposé au dispositif de serrage (31) présentant un siège (55) pour recevoir le dispositif électrique (2) dans une connexion géométrique, les bords opposés (8) de l'adaptateur (1) présentant des brides (10) pour connexion à une structure support (7), ledit conducteur (33) comprenant une petite barre conductrice (33) en forme de U, ayant une extrémité (51) fixée à une partie dorsale dudit dispositif de serrage (31), et une autre extrémité (52), faisant saillie partiellement du corps (30) de l'adaptateur (1) et insérée dans un siège de connexion (47) du dispositif électrique (2).

2. Adaptateur (1) selon la revendication 1, **caractérisé par le fait que** le siège (55) pour le dispositif électrique (2) prend la forme d'un canal, et **par le fait que** les ouvertures du canal sont définies par les bords de l'adaptateur qui sont positionnés transversalement par rapport aux barres (4).

3. Adaptateur (1) selon la revendication 2, **caractérisé par le fait que** plusieurs adaptateurs (1) peuvent être installés avec leurs bords positionnés transversalement aux barres, côte à côte, pour former un support pour des dispositifs à une pluralité de pôles (2).

4. Adaptateur (1) selon la revendication 1, **caractérisé par le fait que** les brides (10) présentent des trous transversaux (14) pour recevoir des moyens de fixation (16, 17).

5. Adaptateur (1) selon la revendication 1, **caractérisé par le fait que** les brides de montage (10) situées sur l'adaptateur (1) présentent des nervures de renforcement (25, 26).

6. Adaptateur (1) selon la revendication 5, **caractérisé par le fait que** la nervure de renforcement (26) prévue pour la bride (10) placée en regard des barres de distribution (4) présente une face inclinée, formant un chemin de glissement (27), de guidage et de centrage, pour l'adaptateur (1).

7. Adaptateur (1) selon la revendication 1, **caractérisé par le fait que** le corps (30) de l'adaptateur (1) est formé d'un matériau isolant.

8. Adaptateur (1) selon la revendication 1, **caractérisé par le fait qu'**il est formé à partir de demi-coques, prenant la forme d'une base et d'un couvercle.

9. Adaptateur (1) selon la revendication 1, **caractérisé par le fait que** le corps (30) de l'adaptateur (1) présente des nervures de renforcement internes (35, 36), délimitant des canaux (37, 38) formant des sièges de support et de fixation pour le dispositif de serrage (31) et le conducteur de connexion électrique (33).

10. Adaptateur (1) selon la revendication 1, **caractérisé par le fait qu'**il présente, sur le côté tourné vers les barres de distribution (4), des gorges (40) formant des sièges transversaux, pour recevoir les barres (4) en une connexion géométrique.

11. Adaptateur (1) selon la revendication 10, **caractérisé par le fait que** le dispositif de serrage (31) est disposé à l'intérieur du corps (30) de l'adaptateur (1) et sur le côté de la gorge (40).

12. Adaptateur (1) selon la revendication 9, **caractérisé par le fait que** les canaux (37, 38) disposés à l'intérieur du corps (30) de l'adaptateur (1) présentent des ouvertures (45) sur le côté opposé au dispositif de serrage (31), près du siège (55) pour le dispositif électrique (2).

13. Adaptateur (1) selon la revendication 1, **caractérisé par le fait que** le conducteur (33) est couvert par un film isolant (50), et que les extrémités de contact électrique (51, 52) du conducteur (33) ne sont pas couvertes par le film isolant (50).
